# EUROPÄISCHE PATENTSCHRIFT

(11) **EP 3 068 559 B1**
(45) Veröffentlichungstag und Bekanntmachung des Hinweises auf die Patenterteilung: **31.10.2018**
(21) Anmeldenummer: 14825250.5
(22) Anmeldetag: 12.11.2014
(51) Int. Cl.: B21L 15/00

(54) **VORRICHTUNG ZUM BEARBEITEN EINES ENDLOSBANDES MIT EINEM BANDKÖRPER AUS METALL**
DEVICE FOR MACHINING AN ENDLESS BELT WITH A BELT BODY MADE OF METAL
DISPOSITIF DE TRAITEMENT D'UNE BANDE SANS FIN POSSÉDANT UN CORPS MÉTALLIQUE

(30) Priorität: 14.11.2013 AT 507602013
(43) Veröffentlichungstag der Anmeldung: 21.09.2016
(73) Patentinhaber: Berndorf Band GmbH, 2560 Berndorf (AT)
(72) Erfinder: SCHUSTER, Roland, A-2560 Berndorf (AT)
(74) Vertreter: Burger, Hannes
(86) Internationale Anmeldenummer: PCT/AT2014/050271
(87) Internationale Veröffentlichungsnummer: WO 2015/070271

(56) Entgegenhaltungen:
- EP-A2- 1 902 794
- US-A- 1 419 156
- US-A1- 2009 126 334

## Beschreibung

Die Erfindung betrifft eine Vorrichtung zum Bearbeiten eines Endlosbandes, welches einen Bandkörper aus Metall aufweist.

Wenn eine Oberflächenbehandlung, beispielsweise ein Polieren, eines Metallbandes in einem Zustand erfolgt, in welchem das Band an seinen Stirnseiten noch nicht zu einem Endlosband geschweißt ist, kann es sein, dass nach einem Verschweißen der Stirnseiten zu dem Endlosband eine Schweißnaht in der Oberfläche erkennbar ist Dies ist vor allem bei Endlosbändern, beispielsweise Filmgießbändern, von Nachteil, deren Oberflächen eine sehr hohe Güte und Qualität aufweisen müssen. Um eine hohe Qualität der Oberfläche der Bänder zu gewährleisten, wäre es am besten, die Bänder vor der Oberflächenbehandlung, beispielsweise Polieren, zu einem Endlosband zu verbinden und die Verbindungsstelle gemeinsam mit den anderen Oberflächenbereichen zu bearbeiten. Eine Spannvorrichtung zum Spannen eines Endlosbandes ist aus der US1429256A oder aus der US1419156A bekannt geworden.

Aufgrund unterschiedlicher Bandlängen ist es bis jetzt noch nicht möglich, zu Zwecken der Oberflächenbearbeitung in ein und derselben Vorrichtung Endlosbänder mit unterschiedlichen Längen einzuspannen. Für Endlosbänder unterschiedlicher Längen wären jeweils eigene Vorrichtungen erforderlich, was jedoch sehr unwirtschaftlich ist.

Es ist daher eine Aufgabe der Erfindung, den oben genannten Nachteil zu überwinden und die Oberflächenbearbeitung von Endlosbändern mit unterschiedlichen Bandlängen mit ein und derselben Vorrichtung zu ermöglichen.

Diese Aufgabe wird mit einer Vorrichtung der eingangs genannten Art erfindungsgemäß dadurch gelöst, dass sie eine Spannstation mit einer Spannrolle für das Endlosband und eine Antriebsstation mit einer Antriebsrolle für das Endlosband oder eine zum Spannen und Antreiben dienende Antriebs-/Spannstation umfasst, wobei die Vorrichtung parallel zueinander verlaufende Führungen umfasst auf welchen die Antriebstation und/oder die Spannstation oder die Antriebs-/Spannstation und/oder eine der Antriebs-/Spannstation in Längsrichtung des Endlosbandes gegenüberliegende Umlenkrolle verfahrbar ist bzw. sind, um einen Abstand zwischen der Spannstation und der Antriebsstation oder zwischen der Antriebs-/Spannstation und der Umlenkrolle zu verändern.

Die Erfindung ermöglicht es, den Abstand zwischen der Spannstation und der Antriebsstation an die Länge des zu bearbeitenden Endlosbandes anzupassen, sodass eine Bearbeitung von Endlosbändern unterschiedlicher Längen auf einfache Weise durchgeführt werden kann.

Gemäß einer Variante der Erfindung, welche sich durch einen einfachen und zuverlässigen Aufbau auszeichnet, kann es vorgesehen sein, dass die Führungen als Schienen ausgebildet sind und jede der Schienen zwei Abstützflächen aufweist, zwischen welchen ein Führungsschlitz angeordnet ist, dessen Längserstreckung parallel zur Richtung der Längserstreckung der Abstützflächen verläuft.

Eine optimale Führung der Spannstation und/oder der Antriebsstation bei einer Veränderung des Abstandes zwischen diesen lässt sich dadurch erzielen, dass die Spannstation und/oder die Antriebsstation Schienenräder aufweisen, wobei jedes Schienenrad auf den Abstützflächen der Schienen zumindest abschnittsweise aufliegende Laufflächen und einen in den Führungsschlitz eingreifenden Spurkranz aufweist.

Gemäß einer bevorzugten Ausführungsform der Erfindung, welche eine einfache Einstellung einer gewünschten Lage des Endlosbandes ermöglicht, kann es vorgesehen sein, dass die Spannrolle und/oder die Antriebsrolle in vertikaler und/oder horizontaler Richtung verschiebbar und/oder um eine horizontale oder vertikale Achse verschwenkbar gelagert ist bzw. sind.

Eine vorteilhafte Variante der Erfindung sieht vor, dass die Vorrichtung zumindest einen Aktor, insbesondere zumindest einen hydraulischen- und/oder pneumatischen Aktor, zum Verschieben und/oder Verschwenken der Spannrolle und/oder der Antriebsrolle aufweist.

Eine Variante der Erfindung sieht vor, dass die Antriebsrolle über einen Motor angetrieben ist, wobei der Motor eine Antriebswelle aufweist, wobei die Antriebswelle als Achse der Antriebsrolle ausgebildet oder die Achse der Antriebsrolle über ein Getriebe oder eine Kupplung mit der Antriebswelle verbunden ist.

Um ein ungewolltes Verschieben der Spannstation und/oder der Antriebsstation zu verhindern, kann es vorgesehen sein, dass die Schienenräder der Spannstation und/oder der Antriebsstation auf den Schienen festsetzbar sind.

Eine sehr zuverlässige Sicherung der Spannstation und/oder der Antriebsstation in einer gewünschten Position lässt sich dadurch erreichen, dass die Vorrichtung Blockierelemente aufweist, die vor und/oder hinter einem Schienenrad auf der Schiene befestigbar sind.

Eine einfache und rasche Montage der Blockierelemente lässt sich dadurch erzielen, dass die Blockierelemente Montagefortsätze mit Öffnungen aufweisen, wobei in einem Untergrund neben den Schienen und/oder in den Abstützflächen der Schienen mit den Öffnungen der Montagefortsätze korrespondierende Öffnungen angeordnet sind, wobei die Öffnungen der Montagefortsätze und die neben und/oder in den Schienen angeordneten Öffnungen mittels Befestigungslementen miteinander verbindbar sind.

Die Erfindung samt weiteren Vorteilen wird im Folgenden anhand einiger nicht einschränkender Ausführungsbeispiele, die in den Zeichnungen dargestellt sind, näher erläutert. In diesen zeigen schematisch:
- Fig. 1: eine perspektivische Darstellung einer erfindungsgemäßen Vorrichtung;
- Fig. 2: ein Schienenrad der Vorrichtung aus Fig. 1 in einer perspektivischen Darstellung;
- Fig. 3: eine perspektivische Darstellung einer Schiene der Vorrichtung aus Fig. 1 mit zwei Blockierelementen;
- Fig. 4: eine perspektivische Darstellung eines Blockierelements aus Fig. 3 im näheren Detail.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

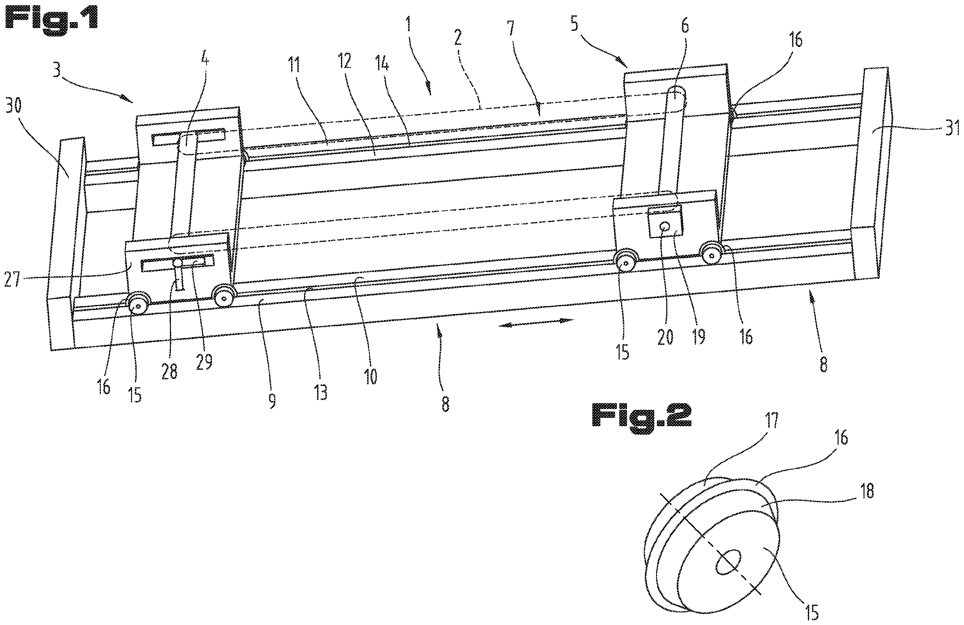

Gemäß Fig.1 weist eine erfindungsgemäße Vorrichtung 1 zum Bearbeiten eines Endlosbandes 2 eine Spannstation 3 mit einer Spannrolle 4 und eine Antriebsstation 5 mit einer Antriebsrolle 6 für das Endlosband 2 auf.

Weiters sind parallel zueinander verlaufende Führungen vorgesehen, auf welchen die Antriebstation 5 und/oder die Spannstation 3 verfahrbar ist bzw. sind, um einen Abstand zwischen der Spannstation 3 und der Antriebsstation 5 zu verändern. Die Führungen sind durch Schienen 7 und 8 gebildet. Jede der Schienen 7, 8 kann zwei Abstützflächen 9, 10, 11, 12 aufweisen, zwischen welchen ein Führungsschlitz 13, 14 angeordnet ist, dessen Längserstreckung parallel zur Richtung der Längserstreckung der Abstützflächen 9, 10, 11, 12 verläuft.

Die Spannstation 3 und/oder die Antriebsstation 5 weisen Schienenräder 15 auf. Wie in Fig. 2 dargestellt, kann jedes Schienenrad 15 auf den Abstützflächen 9, 10, 11, 12 der Schienen 7, 8 abschnittsweise aufliegende Laufflächen 17 und 18 sowie einen in den Führungsschlitz 13 bzw. 14 eingreifenden Spurkranz 16 aufweisen.

Auch wenn in dem dargestellten Ausführungsbeispiel die Spannstation 3 und die Antriebsstation 5 entlang der Schienen 7 und 8 verschiebbar dargestellt sind, kann gemäß einem anderen Ausführungsbeispiel entweder die Antriebsstation 5 oder die Spannstation 6 stationär und angeordnet sein.

Die Antriebsrolle 6 kann über einen Motor 19 angetrieben sein. Der Motor 19 kann eine Antriebswelle aufweisen, wobei die Antriebswelle als Achse 20 der Antriebsrolle 6 ausgebildet sein kann. Die Achse 20 der Antriebsrolle 6 kann auch über ein Getriebe oder eine Kupplung mit der Antriebswelle verbunden sein.

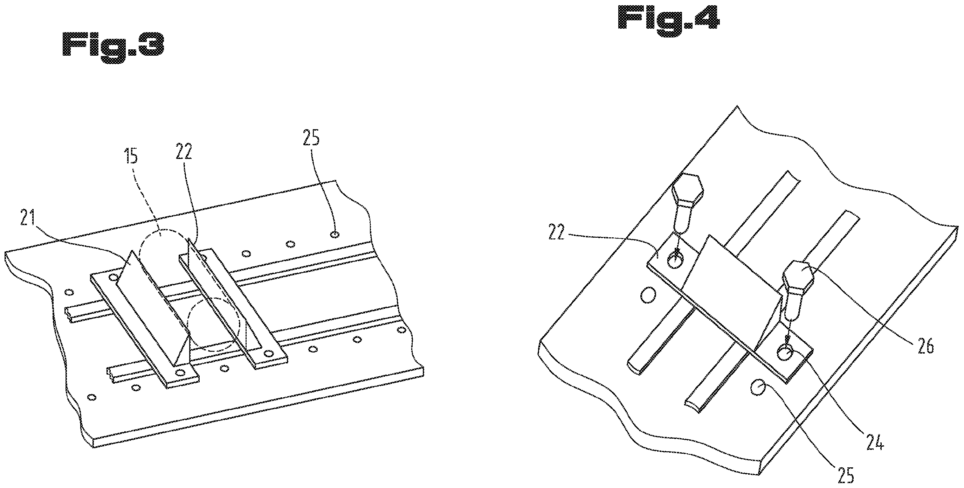

Wie in Fig. 3 und 4 dargestellt kann die Vorrichtung Blockierelemente 21, 22 aufweisen, die vor und/oder hinter einem Schienenrad 15 auf den Schienen 7, 8 befestigbar sind, um eine Fixierung der Spannstation 3 und/oder der Antriebsstation 5 in einer gewünschten Position zu ermöglichen.

Die Blockierelemente 21, 22 können Montagefortsätze 23 mit Öffnungen 24 aufweisen. In einem Untergrund neben den Schienen 7, 8 und/oder in den Laufflächen der Schienen 7, 8 können mit den Öffnungen 24 der Montagefortsätze 23 korrespondierende Öffnungen 25 angeordnet sein. Die Öffnungen 24 der Montagefortsätze 23 und die neben und/oder auf den Schienen 7, 8 angeordneten Öffnungen 25 können mittels Befestigungselementen 26, beispielsweise Bolzen oder Schrauben, miteinander verbunden werden.

Wieder Bezugnehmend auf Fig. 1 kann es vorgesehen sein, dass die Spannstation 3 ein Grundgestell 27 aufweist, in welchen die Spannrolle 4 drehbar gelagert ist. Die Schienenräder 15 sind an dem Grundgestell 27 angeordnet. Die Spannrolle 4 kann in vertikaler und/oder horizontaler Richtung an dem Grundgestell 27 verschiebbar und/oder um eine horizontale oder vertikale Achse verschwenkbar gelagert sein. Weiters kann an einander gegenüberliegenden Seiten des Grundgestells 27 mindestens ein Aktor 28, 29, beispielsweise ein hydraulischer, pneumatischer, hydropneumatischer, mechanischer oder elektromechanischer Aktor, zum Verschieben und/oder Verschwenken der Spannrolle 4 angeordnet sein. Auch die Antriebsstation 6 kann ein dem Grundgestell 27 entsprechend ausgeführtes Grundgestell aufweisen und in diesem mittels entsprechender Aktoren verschwenkbar und/oder verschiebbar gelagert sein.

An dieser Stelle sei darauf hingewiesen, dass die Antriebsfunktion der Antriebsstation 5 und der Spannstation 3 auch in einer gemeinsamen Antriebs-/Spannstation realisiert sein können. Die Antriebs-Spannstation kann in Fig. 1 beispielsweise an der Position der Antriebsstation 5 angeordnet werden. An einem der Antriebs-Spannstation gegenüberliegenden, längsseitigen Ende des Endlosbandes kann in diesem Fall anstelle der Spannstation 3 eine Umlenkrolle angeordnet sein.

Die Ausführungsbeispiele zeigen mögliche Ausführungsvarianten der erfindungsgemäßen Vorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der erfindungsgemäßen Vorrichtung diese bzw. deren Bestandteile teilweise unmaßstäblich und/oder vergrößert und/oder verkleinert dargestellt wurden.

### Bezugszeichenaufstellung

- 1: Vorrichtung
- 2: Endlosband
- 3: Spannstation
- 4: Spannrolle
- 5: Antriebsstation
- 6: Antriebsrolle
- 7: Schiene
- 8: Schiene
- 9: Abstützfläche
- 10: Abstützfläche
- 11: Abstützfläche
- 12: Abstützfläche
- 13: Führungsschlitz
- 14: Führungsschlitz
- 15: Schienenrad
- 16: Spurkranz
- 17: Lauffläche
- 18: Lauffläche
- 19: Motor
- 20: Achse
- 21: Blockierelement
- 22: Blockierelement
- 23: Montagefortsatz
- 24: Öffnung
- 25: Öffnung
- 26: Befestigungselement
- 27: Gestell
- 28: Aktor
- 29: Aktor

## Patentansprüche

1. Vorrichtung (1) zum Bearbeiten eines Endlosbandes (2), welches einen Bandkörper aus Metall aufweist, wobei die Vorrichtung eine Spannstation (3) mit einer Spannrolle (4) für das Endlosband (2) und eine Antriebsstation (5) mit einer Antriebsrolle (6) für das Endlosband (2) oder eine zum Spannen und Antreiben dienende Antriebs-/Spannstation umfasst, wobei die Vorrichtung (1) parallel zueinander verlaufende Führungen umfasst auf welchen die Antriebstation (5) und/oder die Spannstation (3) oder die Antriebs-/Spannstation und/oder eine der Antriebs-/Spannstation in Längsrichtung des Endlosbandes (2) gegenüberliegende Umlenkrolle verfahrbar ist bzw. sind, um einen Abstand zwischen der Spannstation (3) und der Antriebsstation (5) oder zwischen der Antriebs-/Spannstation und der Umlenkrolle zu verändern, wobei die Führungen als Schienen ausgebildet sind, und jede der Schienen (7, 8) zwei Abstützflächen (9, 10, 11, 12) aufweist, zwischen welchen ein Führungsschlitz (13, 14) angeordnet ist, dessen Längserstreckung parallel zur Richtung der Längserstreckung der Abstützflächen (9, 10, 11, 12) verläuft, **dadurch gekennzeichnet, dass** die Spannstation (3) und/oder die Antriebsstation (5) Schienenräder (15) aufweisen, wobei jedes Schienenrad (15) auf den Abstützflächen (9, 10, 11, 12) der Schienen (7, 8) zumindest abschnittsweise aufliegende Laufflächen (17, 18) und einen in den Führungsschlitz(13, 14) eingreifenden Spurkranz (16) aufweist.

2. Vorrichtung nach Anspruch 1, **dadurch gekennzeichnet, dass** die Spannstation (3) und/oder die Antriebsstation (5) ein Grundgestell (27) aufweist bzw. aufweisen, in welchen die Spannrolle und/oder die Antriebsrolle drehbar gelagert ist bzw. sind, wobei die Schienenräder an dem Grundgestell (27) angeordnet sind.

3. Vorrichtung nach Anspruch 1 oder 2, **dadurch gekennzeichnet, dass** die Spannrolle (4) und/oder die Antriebsrolle (6) in vertikaler und/oder horizontaler Richtung verschiebbar und/oder um eine horizontale oder vertikale Achse verschwenkbar gelagert ist bzw. sind.

4. Vorrichtung nach Anspruch 3, **dadurch gekennzeichnet, dass** sie zumindest einen Aktor (28, 29) zum Verschieben und/oder Verschwenken der Spannrolle und/oder der Antriebsrolle aufweist.

5. Vorrichtung nach einem der Ansprüche 1 bis 4, **dadurch gekennzeichnet, dass** die Antriebsrolle (6) über einen Motor (19) angetrieben ist, wobei der Motor eine Antriebswelle aufweist, wobei die Antriebswelle als Achse (20) der Antriebsrolle ausgebildet oder die Achse (20) der Antriebsrolle über ein Getriebe oder eine Kupplung mit der Antriebswelle verbunden ist.

6. Vorrichtung nach einem der Ansprüche 1 bis 5, **dadurch gekennzeichnet, dass** die Schienenräder (15) der Spannstation (3) und/oder der Antriebsstation (5) auf den Schienen (7, 8) festsetzbar sind.

7. Vorrichtung nach Anspruch 6, **dadurch gekennzeichnet, dass** sie Blockierelemente (21, 22) aufweist, die vor und/oder hinter einem Schienenrad (15) auf der Schiene (7, 8) oder neben dieser befestigbar sind.

8. Vorrichtung nach Anspruch 7, **dadurch gekennzeichnet, dass** die Blockierelemente (21, 22) Montagefortsätze (23) mit Öffnungen (24) aufweisen, wobei in einem Untergrund neben den Schienen (7, 8) und/oder in den Abstützflächen (9, 10, 11, 12) der Schienen mit den Öffnungen (24) der Montagefortsätze (23) korrespondierende Öffnungen (25) angeordnet sind, wobei die Öffnungen (24) der Montagefortsätze /23) und die neben und/oder den Schienen (7, 8) angeordneten Öffnungen (25) mittels Befestigungselementen (26) miteinander verbindbar sind.

## Claims

1. A device (1) for machining an endless belt (2) which comprises a belt body made of metal, wherein the device comprises a tensioning station (3) with a tensioning roller (4) for the endless belt (2) and a drive station (5) with a drive roller (6) for the endless belt (2) or a drive/tensioning station which is used for the tensioning and driving, wherein the device (1) comprises guides which run parallel to one another, the drive station (5) and/or the tensioning station (3) or the drive/tensioning station and/or a deflection roller opposing the drive/tensioning station in the longitudinal direction of the endless belt (2) being able to be moved on said guides in order to alter a distance between the tensioning station (3) and the drive station (5) or between the drive/tensioning station and the deflection roller, wherein the guides are configured as rails and each of the rails (7, 8) comprises two support surfaces (9, 10, 11, 12), a guide slot (13, 14) being arranged therebetween, the longitudinal extent of said guide slot extending parallel to the direction of the longitudinal extent of the support surfaces (9, 10, 11, 12), **characterised in that** the tensioning station (3) and/or the drive station (5) comprise rail wheels (15), wherein each rail wheel (15) comprises running surfaces (17, 18) at least partially bearing against the support surfaces (9, 10, 11, 12) of the rails (7, 8) and a wheel flange (16) engaging in the guide slot (13, 14).

2. The device according to claim 1, **characterised in that** the tensioning station (3) and/or the drive station (5) comprises and/or comprise a base frame (27), the tensioning roller and/or the drive roller being rotatably mounted therein, wherein the rail wheels are arranged on the base frame (27).

3. The device according to claim 1 or 2, **characterised in that** the tensioning roller (4) and/or the drive roller (6) is and/or are displaceable in the vertical and/or horizontal direction and/or is and/or are pivotably mounted about a horizontal or vertical axis.

4. The device according to claim 3, **characterised in that** it comprises at least one actuator (28, 29) for displacing and/or pivoting the tensioning roller and/or the drive roller.

5. The device according to one of claims 1 to 4, **characterised in that** the drive roller (6) is driven via a motor (19), wherein the motor comprises a drive shaft, wherein the drive shaft is configured as an axle (20) of the drive roller or the axle (20) of the drive roller is connected via a gear mechanism or a coupling to the drive shaft.

6. The device according to one of claims 1 to 5, **characterised in that** the rail wheels (15) of the tensioning station (3) and/or the drive station (5) are able to be secured to the rails (7, 8).

7. The device according to claim 6, **characterised in that** it comprises blocking elements (21, 22) which are able to be fastened upstream and/or downstream of a rail wheel (15) to the rail (7, 8) or adjacent thereto.

8. The device according to claim 7, **characterised in that** the blocking elements (21, 22) comprise mounting projections (23) with openings (24), wherein openings (25) corresponding to the openings (24) of the mounting projections (23) are arranged in a substrate adjacent to the rails (7, 8) and/or in the support surfaces (9, 10, 11, 12) of the rails, wherein the openings (24) of the mounting projections (23) and the openings (25) arranged adjacent to and/or the rails (7, 8) are able to be connected together by means of fastening elements (26).

## Revendications

1. Dispositif (1) de traitement d'une bande sans fin (2), qui comprend un corps de bande en métal, le dispositif comprenant une station de serrage (3) avec un rouleau de serrage (4) pour la bande sans fin (2) et une station d'entraînement (5) avec un rouleau d'entraînement (6) pour la bande sans fin (2) ou une station d'entraînement/serrage permettant le serrage et l'entraînement,, le dispositif (1) comprenant des guidages s'étendant parallèlement entre eux, sur lesquels la station d'entraînement (5) et/ou la station de serrage (3) ou la station d'entraînement/serrage et/ou un rouleau de renvoi opposé à la station d'entraînement/serrage dans la direction longitudinale de la bande sans fin (2) sont mobiles, afin de modifier une distance entre la station de serrage (3) et la station d'entraînement (5) ou entre la station d'entraînement/serrage et le rouleau de renvoi, les guidages étant conçus comme des rails et chacun des rails (7, 8) comprenant deux surfaces d'appui (9, 10, 11, 12), entre lesquelles une fente de guidage (13, 14) est disposée, dont l'extension longitudinale s'étendant parallèlement à la direction de l'extension longitudinale des surfaces d'appui (9, 10, 11, 12), **caractérisé en ce que** la station de serrage (3) et/ou la station d'entraînement (5) comprennent des roues pour rails (15), chaque roue pour rail (15) comprenant des surfaces de roulement (17, 18) reposant au moins par endroits sur les surfaces d'appui (9, 10, 11, 12) des rails (7, 8) et un boudin de roue (16) s'emboîtant dans la fente de guidage (13, 14).

2. Dispositif selon la revendication 1, **caractérisé en ce que** la station de serrage (3) et/ou la station d'entraînement (5) comprennent un châssis de base (27) dans lequel le rouleau de serrage et/ou le rouleau d'entraînement sont logés de manière rotative, les roues pour rails étant disposées sur le châssis de base (27).

3. Dispositif selon la revendication 1 ou 2, **caractérisé en ce que** le rouleau de serrage (4) et/ou le rouleau d'entraînement (6) sont logés de manière mobile dans la direction verticale et/ou horizontale et/ou de manière pivotante autour d'un axe horizontal ou vertical.

4. Dispositif selon la revendication 3, **caractérisé en ce qu'**il comprend au moins un actionneur (28, 29) pour le déplacement et/ou le pivotement du rouleau de serrage et/ou le rouleau d'entraînement.

5. Dispositif selon l'une des revendications 1 à 4, **caractérisé en ce que** le rouleau d'entraînement (6) est entraîné par l'intermédiaire d'un moteur (19), le moteur comprenant un arbre d'entraînement, l'arbre d'entraînement étant conçu comme un axe (20) du rouleau d'entraînement ou l'axe (20) du rouleau d'entraînement étant relié avec l'arbre d'entraînement par l'intermédiaire d'une transmission ou d'un couplage.

6. Dispositif selon l'une des revendications 1 à 5, **caractérisé en ce que** les roues pour rails (15) de la station de serrage (3) et/ou la station d'entraînement (5) peuvent être fixées sur les rails (7, 8).

7. Dispositif selon la revendication 6, **caractérisé en ce qu'**il comprend des éléments de blocage (21, 22) qui peuvent être fixés devant et/ou derrière une roue pour rail (15) sur le rail (7, 8) ou à côté de celui-ci.

8. Dispositif selon la revendication 7, **caractérisé en ce que** les éléments de blocage (21, 22) comprennent des saillies de montage (23) avec des ouvertures (24), moyennant quoi, sur un fond à côté des rails (7, 8) et/ou dans les surfaces d'appui (9, 10, 11, 12) des rails, sont disposées des ouvertures (25) correspondant aux ouvertures (24) des saillies de montage (23), les ouvertures (24) des saillies de montage (23) et les ouvertures (25) disposées à côté des rails (7, 8) pouvant être reliées entre elles au moyen d'éléments de fixation (26).
